# EUROPÄISCHE PATENTSCHRIFT

(11) **EP 4 105 497 B1**
(45) Veröffentlichungstag und Bekanntmachung des Hinweises auf die Patenterteilung: **14.08.2024**
(21) Anmeldenummer: 21180367.1
(22) Anmeldetag: 18.06.2021
(51) Int. Cl.: F16B 5/02, F16B 11/00, F16B 37/04, F16B 37/14, F16B 41/00

(54) **HALTEVORRICHTUNG UND VERFAHREN ZU DEREN ANBRINGUNG**
HOLDER DEVICE AND METHOD FOR ITS ATTACHMENT
DISPOSITIF DE MAINTIEN ET SON PROCÉDÉ D'APPLICATION

(43) Veröffentlichungstag der Anmeldung: 21.12.2022
(73) Patentinhaber: SFS Group International AG, 9435 Heerbrugg (CH)
(72) Erfinder: ROTTLER, Markus, 72224 Ebhausen (DE); HEINEKE, Kai, 75385 Teinach / Zavelstein (DE)

(56) Entgegenhaltungen:
- EP-B1- 2 890 905
- DE-U1- 202016 106 073
- US-A- 4 295 766
- US-A1- 2011 250 034

## Beschreibung

Die vorliegende Erfindung befasst sich mit einer Haltevorrichtung zum Anbringen von Bauelementen an einer Wand, insbesondere an Leichtbauelementen, die zur Innenverkleidung im Fahrzeug- und Flugzeugbau, in Schiffen, Bahnen, Bussen, Fahrzeuganhängern und Campingmobilen dienen können. Ferner beschreibt sie ein Verfahren zur Anbringung einer solchen Haltevorrichtung an einer Wandoberfläche.

### HINTERGRUND

Innenverkleidungen, speziell Wandelemente in Fahrzeugen und vor allem Flugzeugen sind ein wichtiges Gestaltungselement des Innenraums und tragen darüber hinaus zur thermischen bzw. akustischen Isolierung bei. Häufig werden sie als Verschalung ohne tragende Funktion ausgeführt und sollen daher möglichst leicht sein. Im Flugzeugbau ist seit langem bekannt, Wandelemente aus Sandwichplatten mit Wabenkern zu verwenden. Als Material dienen hierbei Papier, Aluminium oder Kunststoffe (bzw. Verbundmaterial hiervon). Diesen Wandelementen ist gemein, dass ihre Verbindungsstellen mit einer tragender Struktur bzw. das Befestigen weiterer Elemente an ihnen kaum mit den bekannten Befestigungsmitteln wie Schrauben, Nägeln oder Punktverklebungen zu realisieren ist.

### STAND DER TECHNIK

Es sind im Stand der Technik verschiedene Lösungen für dieses Problem bekannt. Sogenannte Inserts mit Gewindemuttern, Klemmen oder Rasten werden in überdimensionierte Sacklöcher im Sandwichpanel eingeklebt, wobei ein Klebstoff den Raum zwischen Insert und dem Wabengewebe formschlüssig füllt und im ausgehärteten Zustand die eingebrachte Last vom Befestigungspunkt in das Sandwichpanel ableitet. Es ist leicht einsichtig, dass ein solcher Befestigungspunkt ein nicht unerhebliches Gewicht darstellt und einen hohen Aufwand beim Einbau erfordert. Jedoch stellt er für einen später einzusetzenden Befestiger an genau der vorgesehenen Stelle eine passende kraft/formschlüssige Schnittstelle zur Verfügung. Gleichzeitig bedeutet das, dass so ein Insert vorbereitet und vorab an der exakt richtigen Stelle eingebracht werden muss.

Ebenfalls bekannt sind sogenannte Clip-Verbinder. Diese stellen vereinfacht gesagt ein klassisches Befestigungselement wie eine Mutter, eine Klemmvorrichtung für einen Bolzen oder ein Rastelement zur Verfügung, welches mit einer Klammer verbunden ist. Die Klammer wird am Rand auf ein Sandwichpanel aufgeschoben und hält das Befestigungselement in einer Sollposition, z.B. relativ zu einer vorgebohrten Durchgangsöffnung. Diese Befestigungsart ist unaufwändig in der Montage, ist jedoch ohne Zusatzaufwand nur an den Rändern einer Sandwichplatte einsetzbar.

Beide hier beschriebenen Lösungen stellen ihr Befestigungselement auf der (nicht zur Ansicht vorgesehenen) Rückseite des Sandwichpanels zur Verfügung. Auf der Vorderseite ist nur die Öffnung sichtbar, in die das Gegen-Befestigungselement eingeführt werden soll, also eine Schraube, ein Bolzen, ein Verriegelungszapfen oder ein funktionelles Äquivalent.

Im Stand der Technik ist es bekannt, Gegenstände, insbesondere an Kacheln in Badezimmern, über einer Befestigungsvorrichtung anzubringen, die vollflächig mit der Wandung verklebt wird. Die kann durch doppelseitige Klebebänder erfolgen oder, wie in der DE 20 2006 003 557U1 gezeigt wird, durch eine Befestigungsvorrichtung, die auf eine Wandfläche angebracht wird und zwischen sich und der Wandfläche einen Hohlraum bildet. Dieser wird mit Klebstoff hinterfüllt (eingespritzt) und stellt damit eine Klebung dar, die auch auf unebenen Hintergründen guten Halt bietet.

Ein ähnliches System zeigt die Gebrauchsmusterschrift DE 20 2016 106 073 U1. Sie zeigt ein Montagesystem mit einem Grundkörper, der ein flächiges, einseitig offenes Klebstoffreservoir aufweist. Der Grundkörper wird mit der offenen Seite des Reservoirs zum Haftgrund hin orientiert und der entstehende Zwischenraum mit Klebstoff gefüllt. Dadurch wird ein fixierender Stoffschluss erzielt.

Es ist Aufgabe der Erfindung, diesen Stand der Technik so weiterzubilden, dass er die spezifischen Anforderungen bei Leichtbauwänden im Flugzeugbau erfüllen kann, leichter ist und einfacher in der Anwendung.

### BESCHREIBUNG DER ERFINDUNG

Diese Aufgabe wird durch ein Befestigungselement gelöst, das üblicherweise auch als Haltenocken bezeichnet wird, gemäss den Merkmalen des unabhängigen Anspruchs 1. Die Unteransprüche beschreiben weitere Varianten und Ausführungsbeispiele. Ein Verfahren zum Anbringen einer Haltevorrichtung ist ebenfalls beschrieben.

Eine Haltevorrichtung bzw. ein Haltenocken dient zur Anbringung von Gegenständen an einer Wand. Unter Wand bzw. Wandoberfläche sei dabei nicht ausschliesslich nur eine senkrechte, plane Bauwerksfläche gemeint, sondern eine allgemeine Oberfläche, die umgangssprachlich als Wand bezeichnet würde. Eine solche Haltevorrichtung umfasst demnach einen Grundkörper, dessen Unterseite diejenige sein soll, die bei der Montage der Wand zugewandt ist und die Oberseite diejenige, die von der Wand weg weist. Die Grundkonfiguration wird ergänzt durch eine Befestigungsanordnung und eine mit dem Grundkörper verriegelbare, die Befestigungsanordnung überwölbende Haube. Die Befestigungsanordnung stellt dabei, wie oben kurz erwähnt, die erste Hälfte einer kraft- und/oder formschlüssigen Schnittstelle dar. Sie umfasst einen Befestiger und weitere, einsatzspezifische Bauteile und wird später erläutert.

Der Grundkörper besitzt eine Mittenöffnung, die eine zum Grundkörper senkrecht stehende Mittenachse definiert. Durch diese Mittenöffnung greift später ein Gegenbefestiger durch, der komplementär zu dem zumindest mit dem Grundkörper verbundenen Befestiger ausgebildet ist. Der mit dem Grundkörper in der Befestigungsanordnung verbundene Befestiger kann ein Gewindeelement (Schraube, Gewindebolzen), eine Mutter (auch Hutmutter), ein Schnappverschluss oder ein Klemmelement (z. B. eine Hülse) sein. Die Befestigungsanordnung ist bevorzugt unverlierbar und optional verdrehsicher mit dem Grundkörper verbunden. "Verbunden" umfasst dabei angeschweisst, angeklebt oder mechanisch gehalten (gesichert, angedrückt, verrastet, geklemmt) bzw. Kombinationen hiervon oder technische Äquivalente.

Der Grundkörper weist an seiner Unterseite eine kreisringförmige Fläche auf, die symmetrisch zur Mittenachse angeordnet ist; mit anderen Worten, die die Mittenöffnung ringförmig umgibt. Am Innenrand wie am Aussenrand dieser Kreisringfläche ist je ein von der Unterseite aufragender, geschlossen umlaufender Steg angebracht. Dabei wird der Steg am Innenrand, relativ zur Ebene der Kreisringfläche betrachtet, höher ausgeführt werden als der Steg am Aussenrand. Dadurch kann der Steg am Innenrand als Zentriervorrichtung ausgebildet werden, was die passgenaue, zentrische Anordnung um die in einer Wandöffnung (für den Gegenbefestiger) vorgesehene Bohrung erleichtert.

Ferner weist der Grundkörper mindestens zwei (weitere) Durchgangsöffnungen in der Kreisringfläche auf, zwischen Oberseite und Unterseite. Die Verbindungslinie zwischen den Positionen der beiden Durchgangsöffnungen schneidet idealerweise die Mittenachse. Geometrisch bedeutet das, dass diese Öffnungen bevorzugt um 180° versetzt auf der Kreisringfläche angeordnet sind.

An der Unterseite des Grundkörpers ergibt sich durch diese Auslegung also ein ringförmiger Kanal, seitlich begrenzt durch die beschriebenen Stege. Die beiden Öffnungen gestatten den Zugang zu diesem ringförmigen Kanal von der Oberseite des Grundkörpers her, auch wenn die Unterseite auf einer ebenen Unterlage aufliegt, weil die beiden vorgeschriebenen Stege am Aussen- bzw. Innenrand einen Abstand zwischen der Kreisringfläche und der Unterlage definieren.

Bevorzugt wird der Steg am Innenrand der Kreisringfläche mit einer geschlossen ringförmigen Klebespur versehen. Diese Klebespur hat vorrangig die Aufgabe, den Grundkörper bzw. die Haltevorrichtung in einer Sollposition an der Wandoberfläche zu fixieren und zudem eine gewisse Dichtungswirkung zur Mittenöffnung zu erlauben. Wie erwähnt, wird später ein (Gegen-) Befestigungselement durch das Wandelement und die Mittenöffnung in den (in der Befestigungsanordnung gelagerten) Befestiger geführt; daher ist jede Beeinträchtigung des freien Durchtritts nachteilig.

Die Klebespur kann als Klebeauftrag oder als doppelseitiges Klebeband realisiert werden. Die Klebewirkung kann z.B. auch erst durch den Anpressdruck bei der Montage realisiert werden. Alternativ bzw. äquivalent kann die Klebespur auch am Aussenring realisiert werden bzw. an beiden.

Eine bevorzugte Ausführung ergibt sich, wenn der Steg am Innenrand der Kreisringfläche höher ausgeführt wird. Höher meint dabei, dass der Steg, bezogen auf die Ebene der Kreisringfläche, weiter herausragt als der Steg am Aussenrand. Dadurch wird im Zentrum eine bessere Abdichtung erzielt. Das kann unter Umständen durch eine Differenz von weniger als einem Millimeter erzielt werden. Wird die Differenz deutlich grösser gewählt, kann der Innenrand wie eine Zentriervorrichtung zur Wandöffnung verwendet werden und erleichtert damit den Montagevorgang. Dazu kann eine Vorbohrung (bzw. deren Durchmesser) in der Unterlage so ausgelegt werden, dass der Innenrand am Bohrungsrand anliegt.

Die oben angesprochene Kreisringfläche kann als ebene Fläche mit rechtwinklig oder geneigten Innen-/Aussenrandstegen ausgelegt werden. Alternativ ist auch eine ovale, im Querschnitt tonnenförmige Wölbung denkbar, was das Volumen des kreisringförmigen Kanals erhöhen hilft. Weiterhin können die Stege so geformt werden, dass sie statt an einer planen Ebene auch an einer konkaven oder konvexen Oberfläche bündig angelegt werden können.

Wie bereits erwähnt wurde, umfasst die erfindungsgemässe Haltevorrichtung im Grundsatz einen Grundkörper, eine Befestigungsanordnung und eine Haube. Die Befestigungsanordnung ist dabei eine Baugruppe aus zumindest einem Befestiger und einer hohlzylinderförmigen bzw. hülsenförmigen Zentrierkappe. Die Zentrierkappe hat die Aufgabe, den Befestiger in einer vorgesehenen Position relativ zum Grundkörper zu halten, während die Haube wiederum ein Sicherungselement darstellt, das die Befestigungsanordnung im Grundkörper fixiert. Als Befestiger in der Befestigungsanordnung kommen in Frage: Gewindeelemente, Muttern, Hutmuttern, Schnappverschlüsse, Klemmung(en) bzw. Rastelemente.

Die Zentrierkappe wiederum weist ein erstes und ein zweites Längsende auf. Sie ist so ausgelegt, dass sie mit dem Befestiger verbunden werden kann und diesen dann im Wesentlichen entlang seiner Längsachse umhüllt. Dazu weist sie am ersten Längsende eine Haltevorrichtung für den Befestiger auf und an ihrem zweiten Längsende eine Öffnung, die den Zugang zum Inneren der Zentrierkappe zulässt. Bildlich und exemplarisch beschrieben wird der Befestiger, wenn als Schraube ausgeführt, an einem Ende, z.B. am Schraubenkopf, gehalten und der Schraubenschaft entlang der zentralen Längsachse der Zentrierkappe angeordnet. Dadurch ist der Schaft allseitig von der Hülse beabstandet umgeben. Am zweiten Längsende ist das Hülsenende zugänglich, damit, im verbauten Zustand, der Gegenbefestiger in den Befestiger eingreifen kann.

Bevorzugt wird die Zentrierkappe so ausgebildet, dass sie verdrehsicher im Grundkörper angeordnet werden kann. Dazu sind an ihrem zweiten Längsende radial nach aussen weisende Zentriernasen vorgesehen, um in korrespondierend geformte Zentriernuten im Grundkörper einzugreifen. Korrespondierend geformt meint hierbei ein technisches Prinzip wie Schlüssel-Schloss bzw. Nut und Feder oder technische Äquivalente. Auf diese Weise kann z.B. ein Formschluss zwischen Grundkörper und Zentrierkappe erreicht werden, was die Verdrehsicherung zwischen Grundkörper und Zentrierkappe bewirkt. Bevorzugt ist diese Verbindung von Grundkörper und Zentrierkappe lösbar gestaltet.

Auf der Oberseite der Haltevorrichtung, genauer auf der Oberseite des Grundkörpers kann weiter ein einstückig angeformter, kreisförmiger Haltering vorgesehen werden, der symmetrisch zur Mittenachse angeordnet ist. In dieser Ausführung kann der Haltering als eine Art Käfig wirken, der, zusätzlich zu den Zentriernasen, ein Ausweichen des verbundenen Befestigungselementes der Haltevorrichtung verhindert.

Die oben bereits angesprochene Haube ist im Wesentlichen glockenförmig oder topfförmig ausgebildet. Die einzelne Zugangsöffnung in den Innenraum der Haube ist daher mit einem Randbereich versehen. Die Haube ist nun so geformt und dimensioniert, dass sie mit dem Haltering formschlüssig verriegelbar ist. Funktionell lässt sich die Haube über den Haltering überstülpen oder zentriert in ihn einsetzen und dort fixieren.

Um die oben bereits angesprochene Sicherungsfunktion der Haube zu erlauben, nämlich die Befestigungsanordnung im bzw. am Grundkörper bzw. Haltering zu fixieren, sind Verriegelungselemente vorgesehen. Diese werden bevorzugt am Haltering wie auch an der Haube (insbesondere am Randbereich) vorgesehen, so dass durch deren Wechselwirkung Haube und Haltering (bzw. der Grundkörper) in einer zueinander definierten Endlage voneinander lösbar oder unlösbar fixiert werden können.

Die Verriegelungselemente zwischen Haube und Haltering können dabei umfassen: Gewinde, Rastelement, Klemmelemente, Klebemittel sowie technisch sinnvolle Kombinationen und technische Äquivalente.

Eine Haltevorrichtung wie vorbeschrieben kann aus Metall oder aus Kunststoff hergestellt werden oder als Kombination aus Kunststoff- und Metallbauteilen. Als Kunststoffe kommen insbesondere Thermoplaste bzw. Polymere in Frage, die in Spritzgussverfahren eingesetzt werden können. Bevorzugt kann der Grundkörper aus transparentem oder semitransparentem Kunststoff gefertigt werden. Wie weiter unten erläutert wird, dient der kreisringförmige Kanal als Klebstoffreservoir und Klebeverbindung. Durch eine (semi-)transparente Ausführung kann visuell kontrolliert werden, ob der Kanal vollständig gefüllt und blasenfrei ist.

In einer Weiterbildung kann die Haube eine Soll-Trennlinie aufweisen, entlang deren die Haube aufgetrennt oder aufgebrochen werden kann. Dies kann durch eine schlitzförmige Trennlinie erreicht werden, die durch Verbindungselemente überbrückt werden. Diese Verbindungselemente werden durch ein geeignetes Werkzeug unter Krafteinwirkung aufgebrochen so dass die Haube in zwei oder mehrere Teile aufbricht. Betrachtet man das Ganze im montierten Zustand, bedeutet dies, dass dadurch die Zentrierkappe freigelegt wird und aus dem Grundkörper entnommen werden kann (bei lösbar angelegter Verbindung). Dies ermöglicht es, nach Entfernen des Gegenbefestigers, die Befestigungsanordnung vom Grundkörper zu lösen. So kann z. B. ein defekter Gegenbefestiger (beschädigtes Gewinde) ersetzt werden und zugleich mit einer neuen Befestigungsanordnung ein in punkto Auszugskraft gleichwertiger Ersatz erfolgen, ohne dass der Grundkörper oder die vorhandene Bohrung geändert werden müsste. Werden Haube und Grundkörper über Schnapp/Rastverschlüsse miteinander verbunden kann dieser Austausch sogar weitgehend ohne Werkzeug erfolgen.

Die Dimensionierung einer Haltevorrichtung wie beschrieben folgt den technischen Anforderungen des geplanten Einsatzes. Der Durchmesser des Grundkörpers und damit auch Grösse und Volumen des kreisringförmigen Klebekanals wird anhand der Wandbeschaffenheit und der Kräfte festgelegt, die die Haltevorrichtung aufzunehmen hat. Ein im Durchmesser gross dimensionierter Grundkörper erlaubt den Flächendruck (bei gegebener Last) zu reduzieren. Um gleichzeitig die Menge an Klebstoff zu kontrollieren kann natürlich der Kanal an der Unterseite nur so breit ausgelegt werden, dass die gewünschte Haltewirkung erzielt wird. Die Dimensionierung der Befestigungsanordnung kann anhand des einzusetzenden Befestigers, seiner Länge und seines Durchmessers entsprechend festgelegt werden. Ein Fachmann kann diese Auslegung mit Hilfe seines Fachwissens realisieren.

Grundsätzlich umfasst ein Verfahren zum Anbringen einer wie oben beschriebenen Haltevorrichtung folgende Schritte:
Bereitstellen eines Wandelementes mit einer Öffnung, an/in die die Haltevorrichtung eingebracht werden soll. Eine ebenfalls bereitgestellte Haltevorrichtung, präziser die Unterseite des Grundkörpers wird an der Wand angedrückt oder angeheftet, wobei die Mittenöffnung des Grundkörpers konzentrisch mit der Wandöffnung angeordnet wird. Mit Anheften wird ein Verkleben mittels eines Kleberings oder auch eine vorübergehende mechanische Befestigung (Halterung) gemeint.

Danach wird durch die erste der beiden Durchgangsöffnungen von der Oberseite des Grundkörpers her ein Klebstoff in den kreisringförmigen Kanal eingefüllt oder eingespritzt. Die kann mithilfe einer Klebepistole, einer Tube oder einer Spritze erfolgen. Der Klebstoff wird sich entlang des auf der Unterseite befindlichen kreisringförmigen Kanals ausbreiten, die zweite Öffnung dient dabei als Entlüftung. Durch die Anordnung um 180° versetzt auf dem Kreisring umfliesst bildlich gesprochen der Kunststoff die Mittenöffnung, geführt durch die kreisförmig angeordneten Stege an der Unterseite, bis der Kleber die Entlüftungsöffnung erreicht und dort austritt. Damit lässt sich der Erfolg der Verklebung visuell kontrollieren. Bei Verwendung eines transparenten Kunststoffes beim Grundkörper kann der Füllgrad abgeschätzt werden und erlaubt eine genaue Dosierung der Klebstoffmenge.

Anschliessend erfolgt das Aushärten des Klebstoffes. Der Fachmann wird, je nach Anwendungsfall und Material von Grundkörper und Wand einen passenden Klebstoff wählen. Die Viskosität wird abgestimmt auf die Dimensionen der Durchgangsbohrungen bzw. des kreisringförmigen Kanals. Es können Zweikomponenten-Klebstoffe verwendet werden, die unmittelbar beim Einspritzen vermischt werden. Ebenso sind lufthärtende Klebstoffe denkbar, schnellhärtende Klebstoffe oder Kleber, deren Aktivatoren beispielsweise als Beschichtung im ringförmigen Klebekanal vorgesehen werden.

Nach dem Aushärten kann die Haltevorrichtung bestimmungsgemäss eingesetzt werden.

Aus den oben gemachten Ausführungen wird klar, dass die erfindungsgemässe Haltevorrichtung (üblicherweise) auf der Rückseite einer Wand montiert wird, an deren Vorderseite ein Gegenstand angebracht werden soll. Die Verankerung erfolgt also, indem der Gegenstand und die Haltevorrichtung die dazwischenliegende Wand klemmen. Der oben angesprochene Gegenbefestiger wird von der Vorderseite her durch das zweite Ende einer Durchgangsöffnung oder -bohrung in der Wand geführt, an deren rückseitigem (erstem) Ende die Haltevorrichtung wie oben beschrieben vormontiert wurde. Dort greift der Gegenbefestiger in die Befestigungsanordnung kraft- oder formschlüssig, klemmend, rastend oder verriegelnd ein. Eine Halteanordnung umfasst somit eine Haltevorrichtung und einen Gegenbefestiger.

Das beschriebene Verfahren hat bei den anfangs erwähnten Leichtbauwänden den Vorteil, dass die Krafteinleitung nicht in das Volumen der Wand erfolgt wie in einer klassischen Verschraubung und auch kein Auffüllen der Hohlkammern benötigt, um einen Verankerungsgrund zu schaffen. Zudem ist das beschriebene Verfahren leicht an unterschiedlich dicke Wände anpassbar durch die Wahl einer entsprechenden Länge des Gegenbefestigers.

Die Verwendung der Begriffe Vorder- und Rückseite sei hierbei nicht limitierend gemeint, sondern bezieht sich auf den häufigsten Anwendungsfall. Wenn die erfindungsgemässe Haltevorrichtung ästhetisch entsprechend ausgeführt wird, ist zum Beispiel auch ein Einsatz denkbar, um an einer beidseitig zugänglichen Trennwand nicht störend aufzufallen.

Je nach Ausführung und Dimensionierung von Grundkörper, Befestigungsanordnung und Haube kann die beschriebene Montage der Haltevorrichtung als Ganzes erfolgen oder indem zunächst nur der Grundkörper verklebt wird. Dies erlaubt auch eine bessere Sichtkontrolle der Verklebung und eventuell in die zentrale Bohrung austretender Klebstoff kann entfernt werden. Zudem kann, je nach Einbaulage, es günstiger sein ein möglichst leichtes erstes Bauteil zu verkleben.

Diese Verfahrensbeschreibung umfasst nicht alle evtl. notwendigen Kontroll-, Justage- oder Warteschritte. Dies tut der Vollständigkeit der Beschreibung aber keinen Abbruch, da Zwischenschritte die beschriebene, erfinderische Kernidee nicht beeinflussen.

### BESCHREIBUNG DER FIGUREN

Die Erfindung wird nun mit Bezug auf die begleitenden Zeichnungen beispielhaft erläutert.
Figur 1 zeigt eine perspektivische Sicht auf die Unterseite 11 eines Grundkörpers 10
Figur 2 zeigt eine perspektivische Sicht auf die Oberseite 12 eines Grundkörpers 10 mit einem Haltering 30
Figur 3 zeigt einen Querschnitt durch einen Grundkörper 10
Figur 4 bezieht sich auf eine Befestigungsanordnung 50 ohne Zentrierkappe 58 in einer spezifischen, erweiterten Ausführung
Figur 5 zeigt Haube 40 in einer ersten Ausführungsform.
Figur 6 zeigt einen Längsschnitt durch eine Befestigungsanordnung vergleichbar Figur 4
Figuren 7 und 8 zeigen je eine Explosionsdarstellung einer Haltevorrichtung 10 mit unterschiedlich ausgeführten Hauben 40

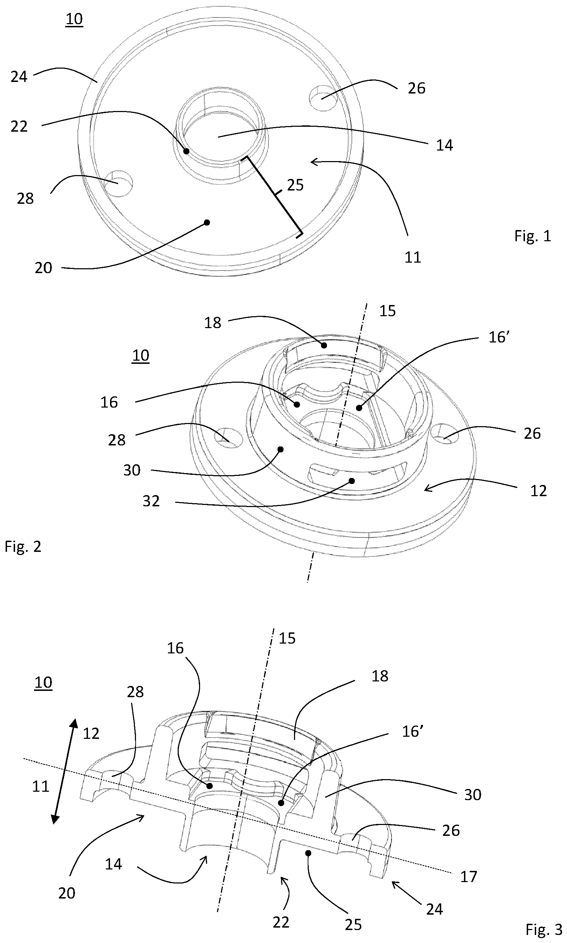

Figur 1 betrachtet einen Grundkörper 10 in üblicher Ausführung mit seinen wesentlichen Merkmalen. Die Unterseite 11 weist eine Kreisringfläche 20 mit einer Mittenöffnung 14 auf. Die innere Begrenzung wird durch den Steg 22 am Innenrand gebildet. Der Aussenrand wird durch einen kreisförmigen, geschlossen umlaufenden Steg 24 dargestellt. Die Stege und die Kreisringfläche bilden somit eine Art flachen, kreisringförmigen Kanal oder Klebekanal 25. Erkennbar sind die beiden Durchgangsöffnungen 26 und 28, die diesen Kanal mit der Oberseite 12 des Grundkörpers 10 verbinden.

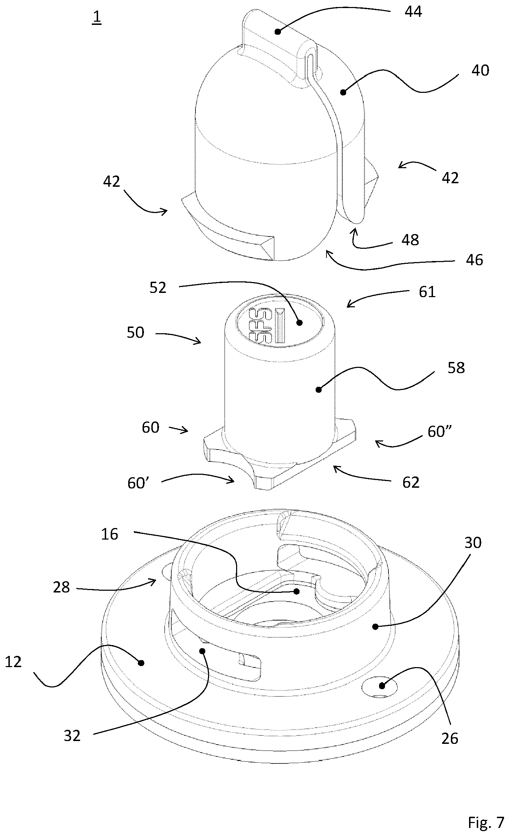

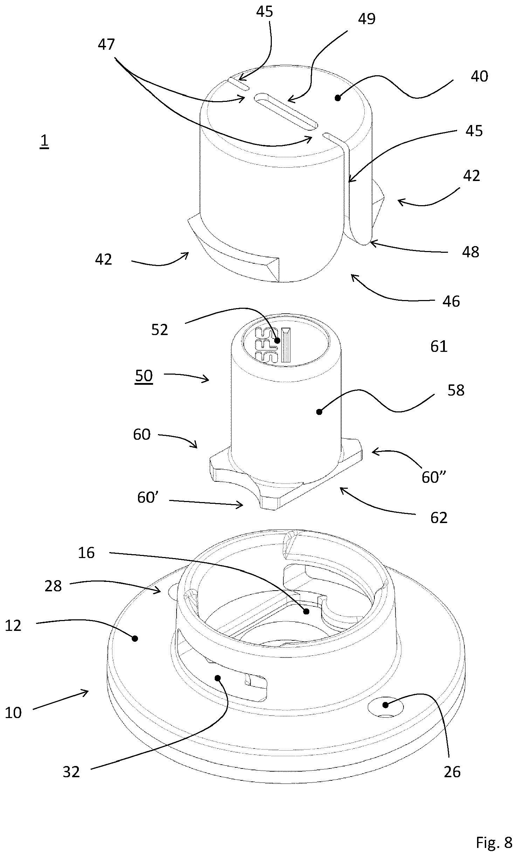

Figur 2 zeigt den Grundkörper 10 aus Figur 1 von seiner Oberseite 12 betrachtet. Der Vergleich mit Figur 1 zeigt die Lage der Durchgangsöffnungen 26 und 28, sie sind umgangssprachlich "gegenüberliegend" auf dem Kreisring angeordnet bzw. auf einer gemeinsamen Verbindungslinie 17 mit der Mittenöffnung 14. Figur 2 zeigt den auf der Oberseite befindlichen Haltering 30, der, aufgesetzt auf der Oberseite 12, eine radiale Begrenzung, ähnlich einem Topf bildet. Wird der Grundkörper 10 auf eine Wandoberfläche geklebt, bietet er damit eine Aufnahme an für eine Befestigungsanordnung und eine Haube (in Figur 2 weggelassen). Grundsätzlich erfüllt der Grundkörper 10 damit die Funktion einer Lastverteilscheibe einerseits und einer Befestigungsschnittstelle. Hierzu sind in Figur 3 am Boden des Halterings 30, in der Hauptebene des Grundkörpers 10, verschiedene Zentriernuten 16, 16',... eingelassen, die - symmetrisch um die Mittenachse 15 angeordnet - zusammen eine Vertiefung bilden, die das zweite Ende 62 der Zentrierkappe 58 der Befestigungsanordnung 50 formschlüssig aufnehmen kann (vgl. Figur 7 und 8).

In der gezeigten Ausführungsform sind im Haltering zwei Verriegelungselemente 32 eingelassen in Form von Durchbrüchen durch die Ringwandung. Diese dienen, wie in der Zusammenschau von Figur 7 und 8 deutlich wird, der Aufnahme von Rastnasen (Verriegelungselemente 42), die am Randbereich 48 der Haube angebracht sind. Um das Einführen dieser Rastnasen in den Haltering zu erlauben, sind Einführhilfen 18 vorgesehen, die hier als kurze, nach innen weisende Rampen ausgebildet sind.

Figur 3 zeigt im Querschnitt noch einmal die Funktionalität und Aufteilung der soeben besprochenen funktionalen Bereiche. Gut erkennbar ist, wie die von der Unterseite 11 abragenden Stege 22 und 24 zwischen sich und der kreisringförmigen Fläche 20 den Klebekanal 25 bilden. Gezeigt ist jene Variante, bei der der Steg 22 am Innenrand höher ausgebildet ist als der am Aussenrand 24. Dadurch kann der Grundkörper an bzw. in eine Bohröffnung zentriert werden. Dabei würde dann die Mittenachse 15 des Grundkörpers wie auch des Innenrand-Stegs 22 mit der Mittenachse der Bohröffnung zusammenfallen.

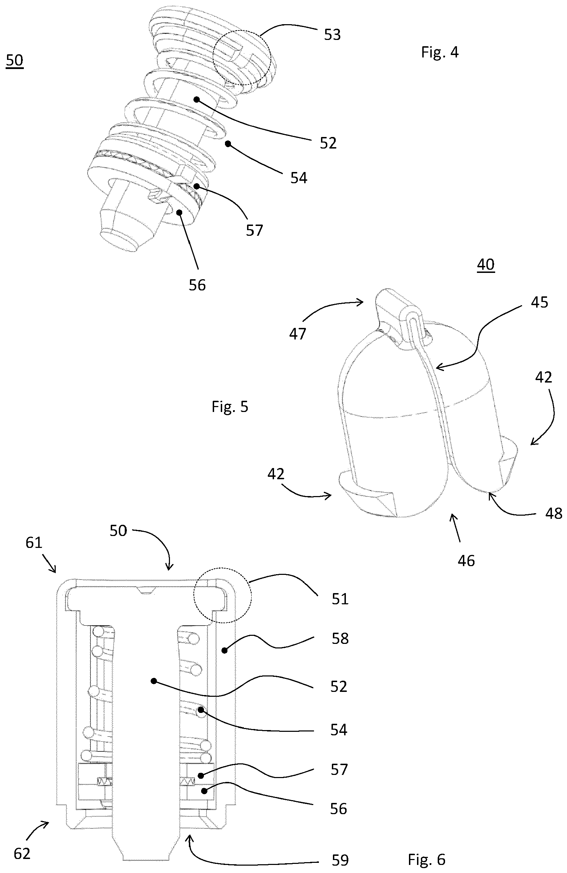

Die Figuren 4 und 6 zeigen Details zur Befestigungsanordnung 50, wobei bei Figur 4 lediglich die Zentrierkappe 58 weggelassen ist. Der hier gezeigte Befestiger 52 ist eine Schraube, die über eine umlaufende Nut 51 als Haltevorrichtung am ersten Längsende 61 in der Zentrierkappe 58 gefasst ist. Sie kann verdrehsicher, z.B. mit Hilfe einer Haltenase 53, verbaut sein. In der hier gezeigten Variante befindet sich im Raum zwischen der Zentrierkappe und dem Schaft der Schraube eine Spiralfeder 54. Diese stützt sich einmal an der Unterseite des Schraubenkopfs ab und andererseits auf einer Kombination aus Stützscheibe 56 und Rastscheibe 57. Letztere weist ebenfalls eine zapfenförmige Verdrehsicherung auf. Wie Figur 6 zeigt, ist die Schraube (Merkmal 52) hier so verbaut, dass sie im Schaftbereich kreisringförmig von der Kombination aus Stützscheibe und Rastscheibe umgeben ist und sich - prinzipiell - entlang der Längsachse der Schraube bewegen lassen. Am unteren Ende der Zentrierkappe 58 (zweites Längsende 62) ist die Zentrierkappe offen (Öffnung 59). Der Gegen-Befestiger zu dieser gezeigten Schraube 52 wäre in dem Fall eine Mutter bzw. Hutmutter. Wenn die Gewinde von Schraube und Mutter beim Setzvorgang ineinander greifen, würde sich - mit Blick auf Figur 6 - die Mutter in Richtung Schraubenkopf bewegen. Sie trifft dann auf die Stützscheibe 56 und drückt diese gegen die Rastscheibe 57 und die Spiralfeder 54. Die Rotation der Mutter relativ zur Schraube wird durch die Rastscheibe 57 aufgenommen, was im Zusammenspiel mit der Spiralfeder dafür sorgt, dass eine Rückdrehsicherung für die Schraubverbindung geschaffen wird.

Die in den Figuren 4 und 6 gezeigte Variante einer Befestigungsanordnung ist nur eine von vielen möglichen. Denkbar wäre im einfachsten Fall eine stabile, hohle Zentrierkappe, in die z. B. eine Klemmvorrichtung (Gegenbefestiger) eingreift, die auf Zug in der Hülse verriegelt. Eine weitere Variante könnte realisiert werden, indem eine oder mehrere ringförmige Nuten oder Hinterschneidungen im zylindrischen Innenraum einer Zentrierkappe vorgesehen werden, in die Rastnasen eines komplementär geformten (Gegen-)Befestigers verriegelnd eingreifen können.

Das Vorteilhafte an dem quasi-modularen Aufbau der Haltevorrichtung ist damit, dass der Grundkörper für eine Vielzahl von Befestigern bzw. Befestigungsanordnungen verwendet werden kann, was die Komplexität bei Lagerhaltung und Montage verringert. Ein weiterer Vorteil ist die Möglichkeit, die Verbindung zu lösen und auszutauschen (abhängig von der gewählten Konfiguration wie oben beschrieben).

Figur 5 zeigt eine Haube 40 in einer ersten Ausführungsvariante, die so ausgelegt ist, dass sie in den in Figur 7 gezeigten Haltering 30 einrasten kann. Dazu verfügt die Haube am Randbereich 48 über Verriegelungselemente 42, die komplementär zu den Elementen 32 ausgelegt sind. Die Haube 40 verfügt über eine Soll-Trennlinie 45, die hier als Trennlücke ausgeführt ist und über den Scheitel der Haube verläuft. Zusammengehalten werden die beiden Hälften durch ein Verbindungselement 47, das hier als Lasche in Form einer Schlaufe ausgeführt ist. Diese Form wurde gewählt, weil dadurch einfach mit einem Seitenschneider oder einem Messer die Lasche entfernt werden und damit die Haube geteilt werden kann. Die Trennlinie 45 läuft zum Randbereich 48 bzw. zur Öffnung 46 hin in eine bogenförmige Verbreiterung aus. Diese Kerbe erleichtert das Entfernen der Haubenhälften aus dem Haltering 30.

Die Figuren 7 und 8 zeigen eine Zusammenstellung von Grundkörper 10, Befestigungsanordnung 50 und zwei verschieden ausgelegten Hauben 40. Diese Elemente sind in der Darstellung entlang ihrer Längsachse / Montageachse auseinandergezogen. In Bezug auf die Grundfunktionalität und Elemente sei auf die Abschnitte oben verwiesen. Hervorgehoben sei, dass in diesen Zeichnungen das vorgesehene Ineinandergreifen der Zentriernasen 60 am zweiten Längsende 62 der Zentrierkappe 58 mit den Zentriernuten 16 im Grundkörper 10 gezeigt wird. Die Haube 40 umschliesst dann die Befestigungsanordnung beim Zusammenbau; die Verriegelungselemente 42 der Haube 40 gleiten entlang der Einführhilfen 18 in den Haltering 30 um dort in die Verriegelungselemente 32 einzurasten.

Die Haube 40 von Figur 8 weicht im Design von der in den Figuren 5 und 8 gezeigten ab. Die äussere Form ist an einen Zylinder angelehnt, die Verriegelungselemente 42 am Randbereich 48 sind identisch zur Ausführung in Figur 7. Die Trennlinie 45 teilt auch hier die Haube in zwei Hälften, die von zwei Verbindungselementen 47 zusammengehalten werden. Das Auftrennen der Hälften wird durch ein Aufhebeln mit einer Schraubendreherklinge über den Schlitz 49 ermöglicht.

## Patentansprüche

1. Haltevorrichtung (1) zur Anbringung von Gegenständen an einer Wandoberfläche, umfassend einen Grundkörper (10), eine Befestigungsanordnung (50) und eine mit dem Grundkörper (10) verriegelbare, die Befestigungsanordnung (50) überwölbende Haube (40), wobei
der Grundkörper (10) eine bei der Montage der Wandoberfläche zugewandte Unterseite (11) und eine von der Wand wegweisende Oberseite (12) aufweist sowie eine Mittenöffnung (14) zwischen Ober- und Unterseite, die eine zum Grundkörper (10) senkrecht stehende Mittenachse (15) definiert; , und der Grundkörper (10) an der Unterseite (11) eine kreisringförmige Fläche (20) aufweist, die symmetrisch um die Mittenachse (15) angeordnet ist;
an deren Innenrand wie Aussenrand je ein von der Unterseite (11) aufragender, geschlossen umlaufender Steg (22, 24) angebracht ist; und
mindestens zwei Durchgangsöffnungen (26, 28) in der Kreisringfläche (20) vorhanden sind zwischen Oberseite (12) und Unterseite (11); **dadurch gekennzeichnet, dass** der Steg (22) am Innenrand der Kreisringfläche höher ausgeführt ist, relativ zur Ebene der Kreisringfläche (20), als der Steg (24) am Aussenrand.

2. Haltevorrichtung nach Anspruch 1, **dadurch gekennzeichnet, dass** eine Verbindungslinie (17) zwischen den beiden Durchgangsöffnungen (26, 28) die Mittenachse (15) schneidet.

3. Haltevorrichtung nach Anspruch 1-2, **dadurch gekennzeichnet, dass** der Steg am Innenrand (22) und/oder am Aussenrand (24) der Kreisringfläche (20) je eine geschlossene, ringförmige Klebespur aufweist.

4. Haltevorrichtung nach Anspruch 1-3, **dadurch gekennzeichnet, dass** der Steg am Innenrand (22) als Zentriervorrichtung ausgebildet zur Anordnung in einer Bohrung.

5. Haltevorrichtung nach Anspruch 1-4, **dadurch gekennzeichnet, dass** die Befestigungsanordnung (50) einen Befestiger (52) umfasst und eine hohlzylinderförmige bzw. hülsenförmige Zentrierkappe (58) mit einem ersten (61) und einem zweiten (62) Längsende, wobei die Zentrierkappe (58) so ausgelegt ist, dass sie mit dem Befestiger (52) verbunden werden kann und diesen dann im Wesentlichen entlang seiner Längsachse umhüllt.

6. Haltevorrichtung nach Anspruch 5, **dadurch gekennzeichnet, dass** die Zentrierkappe (58) an ihrem ersten Längsende (61) eine Haltevorrichtung (51) für den Befestiger (52) aufweist und an ihrem zweiten Längsende (62) eine Öffnung (59), die den Zugang zum Inneren der Zentrierkappe (58) zulässt.

7. Haltevorrichtung nach Anspruch 5 und 6, **dadurch gekennzeichnet, dass** die Zentrierkappe (58) an ihrem zweiten Längsende (62) radial nach aussen weisende Zentriernasen (60, 60', 60",...) aufweist, welche dazu ausgelegt sind, in korrespondierend geformten Zentriernuten (16, 16',..) im Grundkörper (10) einzugreifen und damit eine Verdrehsicherung zwischen Grundkörper (10) und Zentrierkappe (58) zu bewirken.

8. Haltevorrichtung nach Anspruch 1-7, **dadurch gekennzeichnet, dass** ferner auf der Oberseite (12) des Grundkörpers (10) ein einstückig angeformter, zylinderförmiger Haltering (30) vorgesehen ist, der symmetrisch zur Mittenachse (15) angeordnet ist.

9. Haltevorrichtung nach Anspruch 8, **dadurch gekennzeichnet, dass** die Haube (40) im Wesentlichen glockenförmig oder topfförmig ausgebildet ist mit einer einzelnen Zugangsöffnung (46), die mit einem Randbereich (48) versehen ist, wobei die Haube (40) so geformt und so dimensioniert ist, dass die Haube (40) mit dem Haltering (30) formschlüssig verriegelbar ist.

10. Haltevorrichtung nach Anspruch 9 **dadurch gekennzeichnet, dass** sowohl am Haltering (30) wie auch an der Haube (40) Verriegelungselemente (32, 42) angebracht sind, die durch Wechselwirkung miteinander die Haube (40) und den Haltering (30) in einer zueinander definierten Endlage voneinander lösbar oder unlösbar fixieren können.

11. Haltevorrichtung (1) nach Anspruch 10, **dadurch gekennzeichnet, dass** die Verriegelungselemente aus einer Gruppe stammen gebildet aus: Gewinde, Rastelemente, Klemmelemente, Klebemittel.

12. Haltevorrichtung (1) nach Anspruch 1-11, **dadurch gekennzeichnet, dass** die Haltevorrichtung (1) aus Metall oder aus Kunststoff, insbesondere einem Thermoplast gefertigt ist oder als Kombination aus Kunststoff- und Metallbauteilen.

13. Haltevorrichtung nach Anspruch 1-12, **dadurch gekennzeichnet, dass** der Befestiger (52) aus einer Gruppe stammt, gebildet aus: Gewindeelement, Mutter, Hutmutter, Schnappverschluss, Klemmung.

14. Haltevorrichtung (1) nach Anspruch 1-13, **dadurch gekennzeichnet, dass** die Haube (40) mindestens eine Soll-Trennlinie (45) aufweist, entlang derer die Haube (40) aufgetrennt werden kann, wobei mindestens ein Verbindungselement (47) vorgesehen ist, welches die Solltrennlinie (45) überbrückt und mechanisch verbindet.-

15. Halteanordnung umfassend eine Haltevorrichtung nach Anspruch 1-14 sowie einen Gegenbefestiger zum Eingriff in die Befestigungsanordnung (50), wobei die Haltevorrichtung (1) über ihre Mittenöffnung (14) zentriert um das erste Ende einer Durchgangsbohrung einer Wand angebracht wird und der Gegenbefestiger von dem zweiten Ende der Durchgangsbohrung eingeführt durch die Wand in die Halteanordnung eingeführt wird und dort in die Befestigungsanordnung kraft- oder formschlüssig, klemmend, rastend oder verriegelnd eingreift.

16. Verfahren zum Anbringen einer Haltevorrichtung nach Anspruch 1 bis 14, mit folgenden Schritten:
- Bereitstellen eines Wandelementes mit einer Öffnung;
- Andrücken oder Anheften des Grundkörpers (10) mit seiner Unterseite (11) an die Wand, wobei die Mittenöffnung (14) des Grundkörpers (10) konzentrisch mit der Wandöffnung angeordnet wird;
- Einfüllen bzw. Einspritzen eines Klebstoffes durch die erste der beiden Durchgangsöffnungen (26) auf der Oberseite (12) des Grundkörpers (10), solange bis
- der Klebstoff durch die zweite Durchgangsöffnung (28) auf der Oberseite (12) des Grundkörpers (10) austritt.

17. Verfahren nach Anspruch 16 zum Anbringen einer Haltevorrichtung nach Anspruch 3 oder 4, **dadurch gekennzeichnet, dass** das Andrücken bzw. Anheften des Grundkörpers mittels der Stege (22, 24) an der Unterseite (11) des Grundkörpers (10) erfolgt und durch die auf dem(n) Steg(en) angebrachten Klebespuren bewirkt wird.

## Claims

1. Holding device (1) for attaching objects to a wall surface, comprising a base body (10), a fastening arrangement (50) and a hood (40) which can be locked to the base body (10) and arches over the fastening arrangement (50), wherein
the base body (10) has a lower side (11) facing the wall surface during assembly and an upper side (12) facing away from the wall, as well as a central opening (14) between the upper and lower sides, which defines a central axis (15) perpendicular to the base body (10);
and the base body (10) has a circular ring-shaped surface (20) on the lower side (11), which is arranged symmetrically about the central axis (15);
on the inner and outer edge thereof a closed circumferential web (22, 24), which projects from the lower side (11), is attached in each case; and
at least two through-openings (26, 28) are provided in the annular surface (20) between the upper side (12) and the lower side (11);
**characterized in that** the web (22) at the inner edge of the annular surface is designed higher, relative to the plane of the annular surface (20), than the web (24) at the outer edge.

2. Holding device according to claim 1, **characterized in that** a connecting line (17) between the two through-openings (26, 28) intersects the central axis (15).

3. Holding device according to claim 1-2, **characterized in that** the web has one closed, annular adhesive track each on the inner edge (22) and/or on the outer edge (24) of the circular ring surface (20).

4. Holding device according to claim 1-3, **characterized in that** the web on the inner edge (22) is designed as a centering device for arrangement in a bore.

5. Holding device according to claim 1-4, **characterized in that** the fastening arrangement (50) comprises a fastener (52) and a hollow cylindrical-shaped or sleeve-shaped centering cap (58) having a first (61) and a second (62) longitudinal end, wherein the centering cap (58) is designed to be connected to the fastener (52) and then envelopes it substantially along its longitudinal axis.

6. Holding device according to claim 5, **characterized in that** the centering cap (58) has a holding device (51) for the fastener (52) at its first longitudinal end (61) and an opening (59) at its second longitudinal end (62), which allows access to the interior of the centering cap (58).

7. Holding device according to claims 5 and 6, **characterized in that** the centering cap (58) has radially outwardly facing centering lugs (60, 60', 60",...) at its second longitudinal end (62), which are designed to engage in correspondingly shaped centering grooves (16, 16',...) in the base body (10) and thus effect an anti-rotation lock between the base body (10) and the centering cap (58).

8. Holding device according to claim 1-7, **characterized in that** further a cylindrical holding ring (30), which is integrally formed in one piece and is arranged symmetrically with respect to the central axis (15), is provided on the upper side (12) of the base body (10).

9. Holding device according to claim 8, **characterized in that** the hood (40) is essentially bell-shaped or pot-shaped with a single access opening (46), which is provided with an edge region (48), wherein the hood (40) is shaped and dimensioned in such a way that the hood (40) can be positively locked to the holding ring (30).

10. Holding device according to claim 9, **characterized in that** locking elements (32, 42) are attached both to the holding ring (30) and to the hood (40), which locking elements can fix the hood (40) and the holding ring (30) in a mutually defined end position in a releasable or non-releasable manner from one another by interacting with one another.

11. Holding device (1) according to claim 10, **characterized in that** the locking elements originate from a group formed by: thread, latching elements, clamping elements, adhesive means.

12. Holding device (1) according to claim 1-11, **characterized in that** the holding device (1) is made of metal or plastic, in particular a thermoplastic, or as a combination of plastic and metal components.

13. Holding device according to claim 1-12, **characterized in that** the fastener (52) comes from a group consisting of: threaded element, nut, cap nut, snap lock, clamp.

14. Holding device (1) according to claims 1-13, **characterized in that** the hood (40) has at least one nominal parting line (45) along which the hood (40) can be separated, wherein at least one connecting element (47) is provided which bridges the nominal parting line (45) and mechanically connects it.

15. Holding arrangement comprising a holding device according to claims 1-14 and a counter-fastener for engaging in the fastening arrangement (50), wherein the holding device (1) is mounted via its central opening (14) centered around the first end of a through-hole of a wall and the counter-fastener is inserted from the second end of the through-hole through the wall into the holding arrangement and engages there in the fastening arrangement in a force-fitting or form-fitting, clamping, latching or locking manner.

16. Method for attaching a holding device according to claim 1 to 14, comprising the following steps of:
- providing a wall element with an opening;
- pressing or attaching the base body (10) with its lower side (11) to the wall, wherein the central opening (14) of the base body (10) is arranged concentrically with the wall opening;
- filling or injecting an adhesive through the first of the two through-openings (26) on the upper side (12) of the base body (10) until
- the adhesive emerges through the second through-opening (28) on the upper side (12) of the base body (10).

17. Method according to claim 16 for attaching a holding device according to claim 3 or 4, **characterized in that** the pressing-on or tacking-on of the base body takes place by means of the webs (22, 24) on the lower side (11) of the base body (10) and is effected by the traces of adhesive applied to the web(s).

## Revendications

1. Dispositif de maintien (1) pour placer des objets sur la surface d'une paroi, comprenant un corps de base (10), un dispositif de fixation (50) et un couvercle (40) qui peut être verrouillé avec le corps de base (10) et s'incurve par-dessus le dispositif de fixation (50), dans lequel
le corps de base (10) comporte une face inférieure (11) tournée vers la surface de paroi lors du montage et une face supérieure (12) tournée à l'opposé de la paroi, ainsi qu'une ouverture centrale (14) entre la face supérieure et la face inférieure, qui définit un axe médian (15) perpendiculaire au corps de base (10), et le corps de base (10) comporte sur sa face inférieure (11) une surface en forme d'anneau circulaire (20) qui est disposée de façon symétrique autour de l'axe médian (15),
une barrette (22, 24), fermée et dépassant de la face inférieure (11), est disposée sur sa périphérie, respectivement sur le bord intérieur et sur le bord extérieur,
et au moins deux ouvertures de passage (26, 28) sont prévues dans la surface en forme d'anneau circulaire (20) entre la face supérieure (12) et la face inférieure (11),
**caractérisé en ce que** la barrette (22) est plus haute sur le bord intérieur de la surface en forme d'anneau circulaire, par rapport au plan de la surface en forme d'anneau circulaire (20), que la barrette (24) du bord extérieur.

2. Dispositif de maintien selon la revendication 1, **caractérisé en ce qu'**une ligne de liaison (17) entre les deux ouvertures de passage (26, 28) coupe l'axe médian (15).

3. Dispositif de maintien selon la revendication 1-2, **caractérisé en ce que** la barrette du bord intérieur (22) et/ou celle du bord extérieur (24) de la surface en forme d'anneau circulaire (20) forment chacune une piste de collage annulaire fermée.

4. Dispositif de maintien selon la revendication 1-3, **caractérisé en ce que** la barrette du bord intérieur (22) est conformée comme un dispositif de centrage pour disposer un perçage.

5. Dispositif de maintien selon la revendication 1-4, **caractérisé en ce que** le dispositif de fixation (50) comprend une fixation (52) et un capuchon de centrage (58) en forme de cylindre creux ou de douille avec une première extrémité longitudinale (61) et une deuxième (62), le capuchon de centrage (58) étant conçu pour pouvoir être assemblé avec la fixation (52) et entourer pour l'essentiel celle-ci le long de son axe longitudinal.

6. Dispositif de maintien selon la revendication 5, **caractérisé en ce que** le capuchon de centrage (58) comporte à sa première extrémité longitudinale (61) un dispositif de maintien (51) pour la fixation (52) et à sa deuxième extrémité longitudinale (62) une ouverture (59) qui donne accès à l'intérieur du capuchon de centrage (58).

7. Dispositif de maintien selon les revendication 5 et 6, **caractérisé en ce que** le capuchon de centrage (58) comporte sur sa deuxième extrémité longitudinale (62) des ergots de centrage (60, 60', 60",...) orientés vers l'extérieur dans le sens radial, qui sont conçus pour s'engager dans des rainures de centrage (16, 16',...) de forme correspondante du corps de base (10) et empêcher ainsi une rotation entre le corps de base (10) et le capuchon de centrage (58).

8. Dispositif de maintien selon les revendications 1-7, **caractérisé en ce qu'**est en outre disposé sur la face supérieure (12) du corps de base (10) un anneau de maintien (30) cylindrique formé dessus d'une pièce, qui est disposé de façon symétrique par rapport à l'axe médian (15).

9. Dispositif de maintien selon la revendication 8, **caractérisé en ce que** le couvercle (40) est sensiblement en forme de cloche ou de pot avec une ouverture d'accès (46) unique dotée d'une zone de bord (48), le couvercle (40) étant conformé et dimensionné de telle façon que le couvercle (40) peut être verrouillé par engagement positif avec la bague de maintien (30).

10. Dispositif de maintien selon la revendication 9, **caractérisé en ce que** des éléments de verrouillage (32, 42) sont disposés aussi bien sur la bague de maintien (30) que sur le couvercle (40) et peuvent interagir ensemble pour fixer le couvercle (40) et la bague de maintien (30) dans une position finale définie l'un par rapport à l'autre, d'une manière pouvant ou non être défaite.

11. Dispositif de maintien (1) selon la revendication 10, **caractérisé en ce que** les éléments de verrouillage sont issus d'un groupe composé de : filetage, éléments d'enclenchement, éléments de serrage, adhésif.

12. Dispositif de maintien (1) selon les revendications 1-11, **caractérisé en ce que** le dispositif de maintien (1) est fait de métal ou de plastique, en particulier d'un thermoplastique, ou d'une combinaison de pièces en plastique et en métal.

13. Dispositif de maintien selon les revendications 1-12, **caractérisé en ce que** la fixation (52) est issue d'un groupe composé de : élément fileté, écrou, écrou chapeau, fermeture enclenchée, serrage.

14. Dispositif de maintien (1) selon les revendications 1-13, **caractérisé en ce que** le couvercle (40) comporte au moins une ligne de découpe (45) le long de laquelle le couvercle (40) peut être découpé, au moins un élément de liaison (47) étant prévu pour franchir la ligne de découpe (45) et la relier mécaniquement.

15. Disposition de maintien comprenant un dispositif de maintien selon les revendications 1-14 ainsi qu'une fixation opposée à mettre en prise dans le dispositif de fixation (50), dans laquelle le dispositif de maintien (1) est centré sur son ouverture médiane (14) autour de la première extrémité d'un perçage traversant d'une paroi et la fixation opposée est introduite dans la disposition de maintien à travers la paroi par la deuxième extrémité du perçage traversant et s'y met en prise dans le dispositif de fixation par friction ou engagement positif, serrage, enclenchement ou verrouillage.

16. Procédé pour la mise en place d'un dispositif de maintien selon les revendications 1 à 14, comprenant les étapes suivantes :
- préparation d'un élément de paroi muni d'une ouverture ;
- pressage ou application du corps de base (10) par sa face inférieure (11) sur la paroi, l'ouverture médiane (14) du corps de base (10) étant disposée de façon concentrique par rapport à l'ouverture de la paroi ;
- remplissage ou injection d'un adhésif à travers la première des deux ouvertures de passage (26) sur la face supérieure (12) du corps de base (10),
- jusqu'à ce que l'adhésif sorte par la deuxième ouverture de passage (28) sur la face supérieure (12) du corps de base (10).

17. Procédé selon la revendication 16 pour la mise en place d'un dispositif de maintien selon la revendication 3 ou 4, **caractérisé en ce que** le pressage ou l'application est réalisé par application du corps de base au moyen des barrettes (22, 24) sur la face inférieure (11) du corps de base (10) et est produit par les pistes de collage appliquées sur la ou les barrettes.
